# EUROPÄISCHE PATENTANMELDUNG

(11) **EP 3 939 419 A1**
(43) Veröffentlichungstag der Anmeldung: **19.01.2022**
(21) Anmeldenummer: 21180556.9
(22) Anmeldetag: 12.09.2019
(51) Int. Cl.: A01K 5/02

(54) **ANTRIEBSRAD ZUM ANTREIBEN EINER FUTTERKETTE FÜR DIE TROCKENFÜTTERUNG VON NUTZTIEREN**

(30) Priorität: 19.09.2018 LU 100931
(62) Teilanmeldung aus: 19197008.6
(71) Anmelder: Big Dutchman International GmbH, 49377 Vechta (DE)
(72) Erfinder: Gerhardt-Hansen, Anders, 5700 Svendborg (DK); Holm, Hugo Styrbaek, 6040 Egtved (DK); Tobergte, Christian, 49205 Hasbergen (DE)
(74) Vertreter: Eisenführ Speiser

(57) **Zusammenfassung**

Die Erfindung betrifft ein Antriebsrad zum Antreiben einer Futterkette für die Trockenfütterung von Nutztieren, eine Fütterungsanlage für die Trockenfütterung von Nutztieren, einen Zahnkranz für ein Antriebsrad, ein Verfahren zum Herstellen eines Antriebsrads, ein Verfahren zum Antreiben einer Futterkette für die Trockenfütterung von Nutztieren, ein Verfahren zum Umrüsten eines Antriebsrads zum Antreiben einer Futterkette für die Trockenfütterung von Nutztieren und die Verwendung eines Antriebsrads in einer Fütterungsanlage für die Trockenfütterung von Nutztieren. Das Antriebsrad (1) umfasst ein Basisrad (200) mit einem axialen Durchgang (201) zur Aufnahme einer Antriebswelle, einen Zahnkranz (100) mit einer gezahnten Außenumfangsfläche, wobei die Außenumfangsfläche eine Vielzahl von Zahnelementen (110) aufweist, wobei jedes Zahnelement zwei Zahnspitzen (111) und eine zwischen den zwei Zahnspitzen angeordnete Kettenausnehmung (112) aufweist, wobei der Zahnkranz ein elastisches Zahnkranzmaterial aufweist oder daraus besteht.

## Beschreibung

Die Erfindung betrifft ein Antriebsrad zum Antreiben einer Futterkette für die Trockenfütterung von Nutztieren, eine Fütterungsanlage für die Trockenfütterung von Nutztieren, einen Zahnkranz für ein Antriebsrad, ein Verfahren zum Herstellen eines Antriebsrads, ein Verfahren zum Antreiben einer Futterkette für die Trockenfütterung von Nutztieren, ein Verfahren zum Umrüsten eines Antriebsrads zum Antreiben einer Futterkette für die Trockenfütterung von Nutztieren und die Verwendung eines Antriebsrads in einer Fütterungsanlage für die Trockenfütterung von Nutztieren.

In der Nutztierhaltung, insbesondere der Schweinehaltung, wird häufig Trockenfutter in Form von Mehl, Krümeln oder Pellets transportiert und ausdosiert. Hierzu kommen Fütterungsanlagen für die Trockenfütterung zum Einsatz. Eine solche Fütterungsanlage transportiert das Trockenfutter von einem Futtersilo über eine Weiterleitung zu Futterstationen beispielsweise für die Einzeltierfütterung, die Beschickung von Futterautomaten für die Ferkelaufzucht oder für die Schweinemast oder für die Beschickung von Abruffütterungsstationen für tragende Sauen in Gruppenhaltung. Die Futterleitung umfasst meist ein Förderrohr mit einer Futterkette, auf der Stauscheiben angeordnet sind. Über eine Antriebsstation wird die Futterkette angetrieben und durch das Förderrohr bewegt, wobei aus dem Futtersilo Futter zwischen die Stauscheiben gelangt und von diesen durch das Förderrohr zu den Futterstationen bewegt wird.

Insbesondere für große Fütterungsanlagen mit langen Futterleitungen sind weitere Verbesserungen der Antriebseinheit wünschenswert.

Es ist daher eine Aufgabe der vorliegenden Erfindung, ein verbessertes Antriebsrad zum Antreiben einer Futterkette für die Trockenfütterung von Nutztieren, eine verbesserte Fütterungsanlage für die Trockenfütterung von Nutztieren, einen verbesserten Zahnkranz für ein Antriebsrad, ein verbessertes Verfahren zum Herstellen eines Antriebsrads, ein verbessertes Verfahren zum Antreiben einer Futterkette für die Trockenfütterung von Nutztieren, ein verbessertes Verfahren zum Umrüsten eines Antriebsrads zum Antreiben einer Futterkette für die Trockenfütterung von Nutztieren und eine verbesserte Verwendung eines Antriebsrads in einer Fütterungsanlage für die Trockenfütterung von Nutztieren bereitzustellen. Insbesondere ist eine Aufgabe der vorliegenden Erfindung, ein Antriebsrad zum Antreiben einer Futterkette für die Trockenfütterung von Nutztieren, eine Fütterungsanlage für die Trockenfütterung von Nutztieren, einen Zahnkranz für ein Antriebsrad, ein Verfahren zum Herstellen eines Antriebsrads, ein Verfahren zum Antreiben einer Futterkette für die Trockenfütterung von Nutztieren, ein Verfahren zum Umrüsten eines Antriebsrads zum Antreiben einer Futterkette für die Trockenfütterung von Nutztieren und eine Verwendung eines Antriebsrads in einer Fütterungsanlage für die Trockenfütterung von Nutztieren bereitzustellen, welche gegenüber existierenden Lösungen kostengünstiger und/oder leistungsstärker ist. Ferner ist es eine Aufgabe der vorliegenden Erfindung, ein Antriebsrad zum Antreiben einer Futterkette für die Trockenfütterung von Nutztieren, eine Fütterungsanlage für die Trockenfütterung von Nutztieren, einen Zahnkranz für ein Antriebsrad, ein Verfahren zum Herstellen eines Antriebsrads, ein Verfahren zum Antreiben einer Futterkette für die Trockenfütterung von Nutztieren, ein Verfahren zum Umrüsten eines Antriebsrads zum Antreiben einer Futterkette für die Trockenfütterung von Nutztieren und eine Verwendung eines Antriebsrads in einer Fütterungsanlage für die Trockenfütterung von Nutztieren bereitzustellen, welches sich positiv auf das Tierwohl auswirkt.

Diese Aufgabe wird erfindungsgemäß gelöst durch ein Antriebsrad zum Antreiben einer Futterkette für die Trockenfütterung von Nutztieren, umfassend ein Basisrad mit einem axialen Durchgang zur Aufnahme einer Antriebswelle, einen Zahnkranz mit einer gezahnten Außenumfangsfläche, wobei die Außenumfangsfläche eine Vielzahl von Zahnelementen aufweist, wobei jedes Zahnelement zwei Zahnspitzen und eine zwischen den zwei Zahnspitzen angeordnete Kettenausnehmung aufweist, wobei der Zahnkranz ein elastisches Zahnkranzmaterial aufweist oder daraus besteht.

Das Antriebsrad zum Antreiben einer Futterkette für die Trockenfütterung von Nutztieren umfasst ein Basisrad, das einen axialen Durchgang aufweist, in dem die Antriebswelle eines Antriebs einer Antriebseinheit einer Fütterungsanlage aufgenommen werden kann. Ferner weist das Antriebsrad einen Zahnkranz auf, der eine gezahnte Außenumfangsfläche hat. Die Außenumfangsfläche des Zahnkranzes weist eine Vielzahl von Zahnelementen auf. Jedes dieser Zahnelemente weist zwei Zahnspitzen auf, die vorzugsweise in axialer Richtung voneinander beabstandet sind. Zwischen den zwei Zahnspitzen ist eine Kettenausnehmung ausgebildet. Zum Antreiben einer Futterkette wird die Futterkette vorzugsweise so über das Antriebsrad geführt, dass die Stauscheiben der Futterkette mit den Zahnelementen des Antriebsrads in Eingriff kommen, wobei die Kettenglieder oder Seilabschnitte der Futterkette zwischen den Stauscheiben durch die Kettenausnehmung laufen. Vorzugsweise ist die Futterkette als Endlos-Futterkette ausgebildet.

Beim hier beschriebenen Antriebsrad ist vorgesehen, dass der Zahnkranz ein elastisches Zahnkranzmaterial aufweist oder daraus besteht.

Das elastische Zahnkranzmaterial erlaubt es, dass sich der Zahnkranz, insbesondere die mit den Stauscheiben einer Futterkette in Kontakt kommenden Zahnelemente, unter Belastung verformen können. Als Belastung werden hier insbesondere die Kräfte verstanden, die dadurch entstehen, dass die vom Antrieb über die Antriebswelle auf das Antriebsrad übertragenen Drehmomente von den Zahnelementen an die Stauscheiben weitergegeben werden. Je länger die anzutreibende Futterkette ist und/oder je mehr Futter mittels der Futterkette entlang der Futterleitung gefördert werden soll, desto größer ist die erforderliche Antriebsleistung und desto größer ist auch die Belastung des Zahnkranzes und insbesondere der Zahnelemente. Dementsprechend vergrößert sich vorzugsweise bei zunehmender Belastung auch die elastische Verformung der Zahnelemente.

Eine solche elastische Verformung des Zahnkranzes, insbesondere der jeweils am stärksten belasteten Zahnelemente, hat verschiedene Vorteile. Beispielsweise hat dies den Effekt, dass im Gegensatz zu Zahnkränzen aus nicht oder weniger elastischem Material und insbesondere bei einer hohen Belastung eine größere Anzahl von Stauscheiben gleichzeitig mit Zahnelementen in Kontakt kommt. Dies ist insbesondere auch dadurch begründet, dass in der Praxis die Abstände zwischen benachbarten Stauscheiben einer Futterkette meist nicht gleich groß sind, beispielsweise aufgrund von Verdrehungen in der Futterkette, etwa durch Verdrehungen der Kettenglieder oder Seilabschnitte zwischen den Stauscheiben oder auch durch Fertigungstoleranzen bei der Kettenherstellung oder durch Benutzungserscheinungen wie das Verschieben der Stauscheiben auf den Kettengliedern oder auch durch Abrieb der Stauscheiben. Ein elastisches Zahnkranzmaterial erlaubt eine elastische Verformung der Zahnelemente derart, dass diese sich unter Belastung an die unterschiedlichen Abstände zwischen den Stauscheiben anpassen und auf diese Weise gleichzeitig eine höhere Anzahl an Stauscheiben mit einer entsprechend höheren Anzahl an Zahnelementen in Eingriff kommt. Auf diese Weise ist es möglich, eine größere Antriebsleistung auf die Futterkette zu übertragen, da hierfür eine entsprechend größere Anzahl von Zahnelementen zur Verfügung steht. Dadurch können längere Futterleitungen und/oder größere Futtermengen bedient werden. Im Vergleich zu existierenden Antriebsrädern, bei denen der Zahnkranz nicht oder weniger elastisch ausgebildet ist und beispielsweise aus glasfaserverstärktem Polyamid (PA6 GF30) besteht, ist ein Antrieb von Futterketten entlang von Futterleitungen, die länger als etwa 400m sind, derzeit nicht möglich.

Die Erfindung beruht unter anderen auf der Erkenntnis, dass In bekannten Futterkettensystemen Schlag- und Schwingbewegungen entstehen, insbesondere beim Anfahren der Kette und innerhalb des Betriebes bei höheren Belastungen der Kette, bspw. durch zeitweilig erhöhter Reibung oder Widerstand im Fördersystem. Um diese Schwingungsneigung zu dämpfen, kann der elektrische Antrieb entsprechend geregelt werden. Dafür sind elektronische Regelungen für einen Sanftanlauf und einen Sanftauslauf einsetzbar, die bereits aus anderen Anwendungsgebieten bekannt sind. Diese Lösungen sind allerdings recht kostspielig, denn die Regelungen müssen schnell reagieren und dürfen nicht dazu neigen ein Schwingen des Kettensystems zu unterstützen, was bei falsch ausgelegter Regelung auftreten kann. Neben der Regelungseinheit werden zusätzlich noch kostspielige Leistungskomponenten benötigt, die in der Lage sind den elektrischen Antrieb entsprechend der Regelvorgaben anzusteuern. Letztere könnten bspw. über Frequenzumrichter oder über pulsbreitenmodulierte Ansteuerungen erfolgen.

Ein weiterer Vorteil der erfindungsgemäßen Lösung ist, dass das elastische Zahnkranzmaterial und die dadurch mögliche elastische Verformung der Zahnelemente unter Belastung ein sanfteres Ein- und Auslaufen der Futterkette in das und aus dem Antriebsrad ermöglichen. Auf diese Weise kann ein insgesamt gleichmäßiger Verlauf der Futterkette im Förderrohr erzielt werden und ein sogenanntes "Schlagen" der Futterkette kann minimiert oder sogar verhindert werden. Durch das Schlagen der Kette gegen das Förderrohr tritt zum einen ein verstärkter Verschleiß des Förderrohrs und/oder der Futterkette auf. Gleichzeitig entsteht durch das Schlagen der Kette eine erhebliche Geräuschbelastung. Die hier beschriebene Lösung mit einem elastischen Zahnkranzmaterial trägt somit zu einem verringerten Verschleiß, einer verringerten Lärmbelastung und damit auch zum Tierwohl bei.

Ein weiterer Vorteil ergibt sich dadurch, dass der Einsatz von elastischen Zahnkranzmaterial gegenüber bei existierenden Antriebsrädern eingesetzten Materialien Kostenvorteile hinsichtlich der Materialkosten und/oder der Herstellungskosten bewirken kann.

Ein weiterer Vorteil ergibt sich ferner dadurch, dass auch bestehende Antriebseinheiten von Fütterungsanlagen umgerüstet werden können. Die kann beispielsweise durch den Austausch des Antriebsrads gegen ein hier beschriebenes Antriebsrad erfolgen. Insbesondere kann dies auch lediglich durch den Austausch eines Zahnkranzes des Antriebsrads durch einen hier beschriebenen Zahnkranz erfolgen. Auf diese Weise kann kostengünstig eine Antriebseinheit so umgerüstet werden, dass die hier beschriebenen Vorteile realisiert werden können.

Als elastisches Zahnkranzmaterial wird hier insbesondere ein Zahnkranzmaterial verstanden, das eine SHORE-Härte A von mindestens 90 und/oder maximal 120 aufweist. Die SHORE-Härte A kann insbesondere nach der DIN 53505 ermittelt werden. Besonders bevorzugt ist, dass das Zahnkranzmaterial eine SHORE-Härte A von mindestens 95 und/oder maximal 110, insbesondere von mindestens 100 und/oder maximal 105 aufweist.

In einer bevorzugten Ausführungsform ist vorgesehen, dass jedes Zahnelement eine Stauscheibenanlagefläche aufweist.

Die Stauscheibenanlagefläche dient insbesondere dazu, mit einer Stauscheibe in Kontakt zu kommen. Der Kontakt zwischen einem Zahnelement und einer Stauscheibe kann auch als Eingriff bezeichnet werden. Über den Kontakt zwischen einem Zahnelement und einer Stauscheibe einer Futterkette wird das von einem Antrieb über eine Antriebswelle auf das Antriebsrad übertragene Drehmoment in eine Vorschubbewegung der Futterkette übertragen.

Es ist ferner bevorzugt, dass die Stauscheibenanlagefläche einen ersten Abschnitt und einen zweiten Abschnitt aufweist. Vorzugsweise weist der erste Abschnitt zum axialen Durchgang in radialer Richtung einen kleineren Abstand auf als der zweite Abschnitt. Ferner vorzugsweise sind die Zahnspitzen am zweiten Abschnitt ausgebildet.

Es ist bevorzugt, dass der erste Abschnitt und der zweite Abschnitt der Stauscheibenanlagefläche zueinander geneigt sind. Eine bevorzugte Weiterbildung zeichnet sich dadurch aus, dass die Stauscheibenanlagefläche, insbesondere der erste und/oder der zweite Abschnitt der Stauscheibenaniagefläche, gekrümmt ist. Ferner ist bevorzugt, dass die Stauscheibenanlagefläche, insbesondere der erste und/oder der zweite Abschnitt der Stauscheibenanlagefläche, einen, vorzugsweise veränderlichen, Radius aufweist. Weiter bevorzugt ist ferner, dass die Stauscheibenaniagefläche, insbesondere der erste und/oder der zweite Abschnitt der Stauscheibenanlagefläche, eine konturierte Oberfläche aufweist.

Diese Ausgestaltungen der Stauscheibenanlagefläche, insbesondere des ersten und des zweiten Abschnitts der Stauscheibenanlagefläche, haben den Vorteil, dass hierdurch ein verbesserter Eingriff zwischen einer Stauscheibe und einem Zahnelement erzielt werden kann. Insbesondere tragen diese Ausgestaltungen der Stauscheibenaniagefläche, insbesondere des ersten und des zweiten Abschnitts der Stauscheibenaniagefläche, dazu bei, dass eine größere Anzahl an Stauscheiben gleichzeitig mit einer entsprechend größeren Anzahl von Zahnelementen in Eingriff kommt. Ferner können diese Ausgestaltungen dazu beitragen, dass eine Stauscheibe länger, insbesondere über einen längeren Weg hinaus, mit der Stauscheibenanlagefläche des Zahnelements in Eingriff bleibt. Auf diese Weise kann die Übertragung einer Antriebsleistung von einem Antrieb auf die Futterkette verbessert werden, sodass auch längere Futterketten angetrieben und/oder größere Futtermengen gefördert werden können.

Gemäß einer bevorzugten Ausführungsform ist vorgesehen, dass das Basisrad ein Basismaterial, vorzugsweise ein elastisches Basismaterial aufweist oder daraus besteht.

Gemäß einer bevorzugten Ausführungsform ist vorgesehen, dass das Basismaterial eine SHORE-Härte A von mindestens 90 und/oder maximal 120 aufweist. Die SHORE-Härte A kann insbesondere nach der DIN 53505 ermittelt werden. Besonders bevorzugt ist, dass das Basismaterial eine SHORE-Härte A von mindestens 95 und/oder maximal 110, insbesondere von mindestens 100 und/oder maximal 105 aufweist

Dabei ist insbesondere bevorzugt, dass das Zahnkranzmaterial und das Basismaterial identisch sind.

Es ist ferner bevorzugt, dass das Zahnkranzmaterial und/oder das Basismaterial ein Kunststoff ist, insbesondere ein elastisches Polymer. Ferner vorzugsweise umfasst das

Zahnkranzmaterial und/oder das Basismaterial Kunststoff, insbesondere ein elastisches Polymer. Insbesondere ist es bevorzugt, dass das Zahnkranzmaterial und/oder das Basismaterial Polyurethan ist oder Polyurethan umfasst.

Gemäß einer bevorzugten Ausführungsform ist vorgesehen, dass der Zahnkranz und das Basisrad einstückig ausgebildet sind. Als einstückige Ausbildung wird hier insbesondere eine Ausbildung verstanden, bei der der Zahnkranz und das Basisrad zusammen in einem Urformverfahren gleichzeitig hergestellt sind.

Eine weitere bevorzugte Fortbildung zeichnet sich dadurch aus, dass der Zahnkranz und/oder das Basisrad als Gussteil, insbesondere als Vakuum-Gussteil, ausgebildet ist bzw. sind.

Eine Ausbildung als Gussteil ist vorzugsweise das Resultat des Urformverfahrens Gießen. Besonders bevorzugt ist die Herstellung in Vakuum-Gießverfahren, bei dem das resultierende Vakuum-Gussteil weniger oder keine Lufteinschlüsse, wie beispielsweise Lunker, aufweist. Vorzugsweise ist die Ausbildung als Gussteil das Resultat des Urformverfahrens Gießen in eine offene Gussform.

Eine bevorzugte Weiterbildung zeichnet sich dadurch aus, dass der Zahnkranz zweigeteilt ausgebildet ist. Vorzugsweise ist eine Trennebene zwischen dem ersten und dem zweiten Teil des Zahnkranzes orthogonal zum axialen Durchgang angeordnet. Ferner ist bevorzugt, dass das Basisrad zweigeteilt ausgebildet ist. Vorzugsweise ist eine Trennebene zwischen dem ersten und dem zweiten Teil des Basisrads orthogonal zum axialen Durchgang angeordnet.

Eine zweigeteilte Ausbildung des Zahnkranzes und/oder des Basisrads kann insbesondere aus herstellungstechnischen Gründen bevorzugt sein. Insbesondere aufgrund der Ausbildung von zwei Zahnspitzen mit dazwischen angeordneter Kettenausnehmung pro Zahnelement kann eine getrennte Herstellung eines ersten und eines zweiten Teils des Zahnkranzes bzw. eines ersten und eines zweiten Teils des Basisrads bevorzugt sein. Zur Bildung des Antriebsrads werden dann vorzugsweise der erste und der zweite Teil des Zahnkranzes bzw. der erste und der zweite Teil des Basisrads an ihre Trennebene zusammengefügt.

Gemäß einer bevorzugten Ausführungsform ist vorgesehen, dass der erste Teil des Zahnkranzes und der erste Teil des Basisrads einstückig ausgebildet sind. In einer weiteren bevorzugten Ausführungsform ist vorgesehen, dass der zweite Teil des Zahnkranzes und der zweite Teil des Basisrads einstückig ausgebildet sind.

Ferner ist vorzugsweise vorgesehen, dass der erste Teil des Zahnkranzes und der erste Teil des Basisrads als Gussteil, insbesondere als Vakuum-Gussteil, ausgebildet sind. Es ist ferner bevorzugt, dass der zweite Teil des Zahnkranzes und der zweite Teil des Basisrads als Gussteil, insbesondere als Vakuum-Gussteil, ausgebildet sind.

Insbesondere kann es bevorzugt sein, dass eine Fläche des Gussteils, die beim Herstellen nicht an einer Gussform anliegt, sondern eine freie Oberfläche bildet, die Trennebene bildet.

Eine weitere Fortbildungsform sieht vor, dass der Zahnkranz und/oder das Basisrad derart zweigeteilt ausgebildet ist, dass die jeweiligen ersten und zweiten Teile auf mehr als eine Art, insbesondere auf mehr als zwei Arten, zusammengesetzt werden können, um den Zahnkranz bzw. das Basisrad zu bilden. Vorzugsweise weist der Zahnkranz bzw. das Basisrad unterschiedliche Eigenschaften (beispielsweise eine Eignung für unterschiedliche Futterketten und/oder einen unterschiedlichen Radius, insbesondere im Bereich der Trennebene) auf, je nachdem, auf weiche Art die zwei Teile zusammengesetzt sind. Insbesondere ist bevorzugt, dass die zwei Teile jeweils mehr als eine, insbesondere zwei Flächen aufweisen, die als Trennebene geeignet sind.

In einer weiteren bevorzugten Ausführungsform ist vorgesehen, dass eine erste Seitenfläche des Basisrads gegenüber dem Zahnkranz zurückversetzt ist und vorzugsweise eine erste Aufnahme für eine erste Stabilisierungsscheibe bildet. Es ist ferner bevorzugt, dass eine zweite Seitenfläche des Basisrads gegenüber dem Zahnkranz zurückversetzt ist und vorzugsweise eine zweite Aufnahme für eine zweite Stabilisierungsscheibe bildet.

Eine weitere bevorzugte Fortbildung zeichnet sich dadurch aus, dass in der ersten Aufnahme der ersten Seitenfläche des Basisrads eine erste Stabilisierungsscheibe angeordnet ist. Ferner ist vorzugsweise vorgesehen, dass in der zweiten Aufnahme der zweiten Seitenfläche des Basisrads eine zweite Stabilisierungsscheibe angeordnet ist.

Vorzugsweise ist die erste Aufnahme für eine erste Stabilisierungsscheibe und/oder die zweite Aufnahme für eine zweite Stabilisierungsscheibe und/oder die erste Stabilisierungsscheibe und/oder die zweite Stabilisierungsscheibe koaxial zum axialen Durchgang angeordnet. Ferner vorzugsweise erstreckt sich der axiale Durchgang durch das Basisrad und durch die erste Stabilisierungsscheibe und/oder durch die zweite Stabilisierungsscheibe. Ferner vorzugsweise ist die erste Aufnahme für eine erste Stabilisierungsscheibe in axialer Richtung gegenüberliegend zur zweiten Aufnahme für eine zweite Stabilisierungsscheibe angeordnet. Ferner vorzugsweise die erste Stabilisierungsscheibe in axialer Richtung gegenüberliegend zur zweiten Stabilisierungsscheibe angeordnet. Ferner vorzugsweise sind die erste und die zweite Aufnahme in axialer Richtung jeweils außenliegend vom Basisrad angeordnet. Ferner vorzugsweise sind die erste und die zweite Stabilisierungsscheibe in axialer Richtung jeweils außenliegend vom Basisrad angeordnet.

Das Vorsehen von Aufnahmen für Stabilisierungsscheibe hat den Vorteil, dass im Bereich des Basisrads eine Verstärkung und Stabilisierung des Antriebsrads erfolgen kann. Insbesondere durch die Verwendung eines elastischen Zahnkranzmaterials und/oder eines elastischen Basismaterials kann es bevorzugt sein, im Bereich des Basisrads die Materialeigenschaften des Antriebsrads zu verstärken. Die Stabilisierungsscheibe hat dabei vorzugsweise auch die Funktion, die Kraftübertragung von der Antriebswelle auf das Basisrad zu ermöglichen. Vorzugsweise erfolgt die Kraftübertragung von der Antriebswelle auf die Nabe über eine Welle-Nabe Verbindung. Vorzugsweise ist ein Anschlussblech mit der Nabe kraft- und/oder form- und/oder stoffschlüssig verbunden. Die Kraftübertragung auf die Stabilisierungsscheibe erfolgt vorzugsweise über eine Lastsicherung, die beispielsweise als eingeschnürtes Blechteil ausgebildet ist. Vorzugsweise ist vorgesehen, dass die Stabilisierungsscheibe daraufhin die Kraft auf das Basisrad überträgt.

Dabei ist insbesondere bevorzugt, dass die erste Stabilisierungsscheibe ein erstes Stabilisierungsmaterial aufweist oder daraus besteht. Es ist ferner bevorzugt, dass die zweite Stabilisierungsscheibe ein zweites Stabilisierungsmaterial aufweist oder daraus besteht. Insbesondere ist bevorzugt, dass das erste und/oder das zweite Stabilisierungsmaterial nicht elastisch oder weniger elastisch als das Zahnkranzmaterial und/oder das Basismaterial ausgebildet sind.

Vorzugsweise sind das erste und das zweite Stabilisierungsmaterial identisch. Eine bevorzugte Weiterbildung zeichnet sich dadurch aus, dass das erste und/oder das zweite Stabilisierungsmaterial Stahl ist oder Stahl umfasst, insbesondere Edelstahl ist oder Edelstahl umfasst. Ferner ist es bevorzugt, dass das erste und/oder das zweite Stabilisierungsmaterial Stahlguss ist oder Stahlguss umfasst. Ferner ist bevorzugt, dass das erste und/oder das zweite Stabilisierungsmaterial Stahlblech ist oder Stahlblech umfasst, insbesondere verzinktes Stahlblech ist oder verzinktes Stahlblech umfasst.

Weitere vorteilhafte Ausführungsvarianten der zuvor beschriebenen Vorrichtung ergeben sich durch Kombination der hier erörterten bevorzugten Merkmale.

Gemäß einem weiteren Aspekt der Erfindung wird die eingangs genannte Aufgabe gelöst durch eine Fütterungsanlage für die Trockenfütterung von Nutztieren, umfassend ein zuvor beschriebenes Antriebsrad und eine Futterkette.

Eine bevorzugte Weiterbildung der Fütterungsanlage sieht vor, dass die Futterkette eine Vielzahl von Stauscheiben umfasst, wobei die Stauscheiben ein Stauscheibenmaterial umfassen oder daraus bestehen. Ferner ist eine bevorzugte Weiterbildung der Fütterungsanlage dadurch gekennzeichnet, dass das Stauscheibenmaterial ein Kunststoff ist oder Kunststoff umfasst. Dabei ist insbesondere bevorzugt, dass das Stauscheibenmaterial Polyamid, insbesondere faserverstärktes Polyamid, ist oder Polyamid, insbesondere faserverstärktes Polyamid, umfasst.

Gemäß einem weiteren Aspekt der Erfindung wird die eingangs genannte Aufgabe gelöst durch einen Zahnkranz für ein zuvor beschriebenes Antriebsrad, wobei der Zahnkranz eine gezahnte Außenumfangsfläche umfasst, wobei die Außenumfangsfläche eine Vielzahl von Zahnelementen aufweist, wobei jedes Zahnelement zwei Zahnspitzen und eine zwischen den zwei Zahnspitzen angeordnete Kettenausnehmung aufweist, wobei der Zahnkranz ein elastisches Zahnkranzmaterial aufweist oder daraus besteht.

Gemäß einem weiteren Aspekt der Erfindung wird die eingangs genannte Aufgabe gelöst durch ein Verfahren zum Herstellen eines zuvor beschriebenen Antriebsrads, das Verfahren umfassend: Formen eines Basisrads mit einem axialen Durchgang zur Aufnahme einer Antriebswelle, Formen eines Zahnkranzes mit einer gezahnten Außenumfangsfläche, wobei die Außenumfangsfläche eine Vielzahl von Zahnelementen aufweist, wobei jedes Zahnelement zwei Zahnspitzen und eine zwischen den zwei Zahnspitzen angeordnete Kettenausnehmung aufweist, wobei der Zahnkranz ein elastisches Zahnkranzmaterial aufweist oder daraus besteht.

Das Formen umfasst insbesondere Urformverfahren, wie beispielsweise Gießen, in dem Bauteile einstückig gefertigt werden können. Weitere spanabhebende Fertigungsverfahren können sich anschließen, wie bspw. Drehen oder Fräsen.

Gemäß einem weiteren Aspekt der Erfindung wird die eingangs genannte Aufgabe gelöst durch ein Verfahren zum Antreiben einer Futterkette für die Trockenfütterung von Nutztieren, das Verfahren umfassend: Antreiben einer Futterkette mittels eines zuvor beschriebenen Antriebsrads.

Gemäß einem weiteren Aspekt der Erfindung wird die eingangs genannte Aufgabe gelöst durch ein Verfahren zum Umrüsten eines Antriebsrads zum Antreiben einer Futterkette für die Trockenfütterung von Nutztieren, das Verfahren umfassend: Entfernen eines Zahnkranzes von einem Antriebsrad, Anordnen eines zuvor beschriebenen Zahnkranzes an dem Antriebsrad.

Gemäß einem weiteren Aspekt der Erfindung wird die eingangs genannte Aufgabe gelöst durch die Verwendung eines zuvor beschriebenen Antriebsrads in einer Fütterungsanlage für die Trockenfütterung von Nutztieren.

Zu den Vorteilen, Ausführungsvarianten und Ausführungsdetails dieser weiteren Aspekte und ihrer möglichen Fortbildungen wird auch auf die vorangegangene Beschreibung zu den entsprechenden Merkmalen des Antriebsrads verwiesen.

Bevorzugte Ausführungsbeispiele werden beispielhaft anhand der beiliegenden Figuren beschrieben. Es zeigen:
- Figur 1:: eine schematische Darstellung eines Ausführungsbeispiels einer Fütterungsanlage für die Trockenfütterung;
- Figur 2:: eine Explosionsdarstellung eines Ausführungsbeispiels einer Antriebseinheit;
- Figur 3:: eine Vorderansicht eines Ausführungsbeispiels einer Antriebseinheit;
- Figur 4:: eine dreidimensionale Ansicht eines Ausführungsbeispiels eines Antriebsrads;
- Figur 5:: eine dreidimensionale Ansicht eines Ausführungsbeispiels einer Futterkette;
- Figur 6:: eine Seitenansicht eines Ausführungsbeispiels einer Futterkette;
- Figur 7:: eine schematische Ansicht einer Futterkette im Eingriff mit einem Ausführungsbeispiel eines Antriebsrads bei geringer Belastung; und
- Figur 8:: eine schematische Ansicht einer Futterkette im Eingriff mit einem Ausführungsbeispiel eines Antriebsrads bei hoher Belastung.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

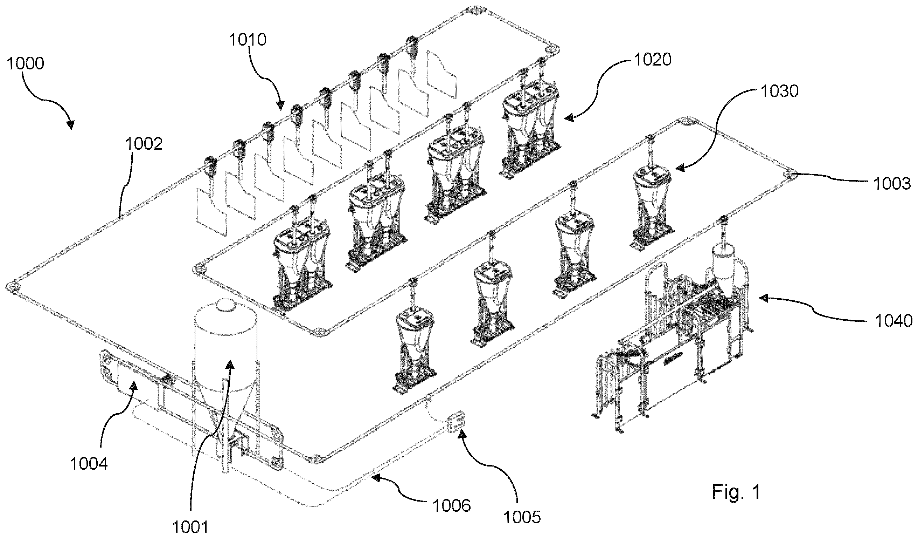

Fig. 1 zeigt eine schematische Darstellung eines Ausführungsbeispiels einer Fütterungsanlage 1000 für die Trockenfütterung von Schweinen. Die Fütterungsanlage 1000 umfasst ein Futtersilo 1001, von dem aus Trockenfutter über eine Futterleitung 1002 zu Futterstationen gefördert wird.

Die Futterleitung 1002 ist in der Regel als Förderrohr 1012 ausgebildet und kann beispielsweise über mehrere Umlenkecken 1003 verlaufen. Innerhalb des Förderrohrs 1012 der Futterleitung 1002 verläuft eine Futterkette 400.

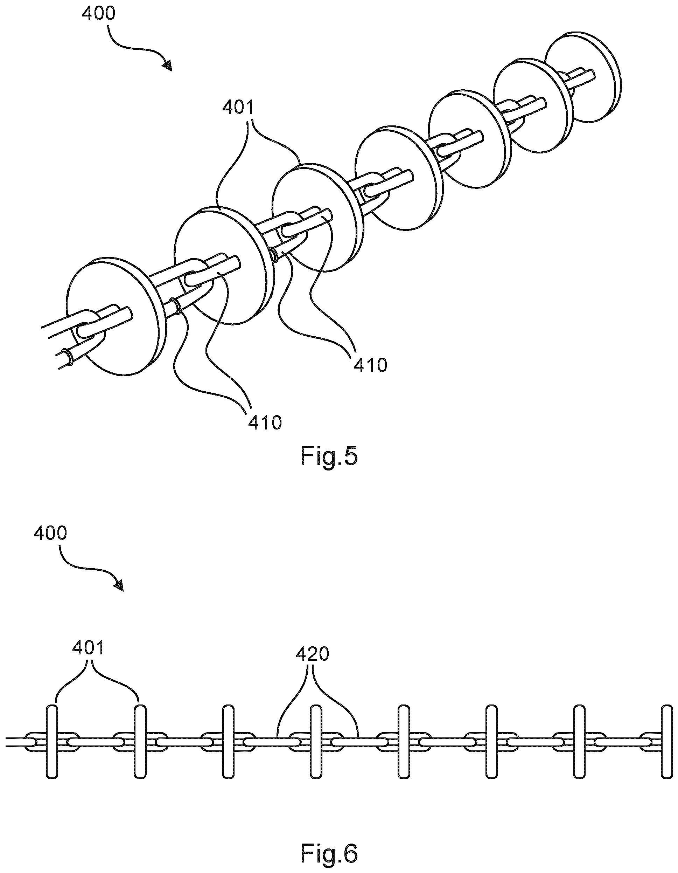

Die insbesondere auch in den Figuren 5 und 6 zu erkennende Futterkette 400 weist voneinander beabstandete Stauscheiben 401 auf, die über Kettenglieder 410 oder Seilabschnitte 420 miteinander verbunden sind.

Die Fütterungsanlage 1000 weist eine Antriebseinheit 1004 auf, über die die Futterkette 400 entlang der Futterleitung 1002 bewegt wird. Vorzugsweise ist die Futterkette 400 als Endlos-Futterkette ausgebildet. Eine Fütterungsanlage 1000 kann insbesondere Futterstationen für die Einzeltierfütterung 1010, Futterstationen für die Beschickung von Futterautomaten 1020 für die Ferkelaufzucht, Futterstationen für die Beschickung von Futterautomaten 1030 für die Mast und/oder Futterstationen für die Beschickung von Abruffütterungsstationen 1040 von tragenden Sauen in Gruppenhaltung aufweisen.

Die Fütterungsanlage 1000 weist ferner vorzugsweise eine Steuerungseinheit 1005 auf, die über Steuersignalleitungen 1006 mit der Antriebseinheit 1004 und/oder dem Futtersilo 1001, insbesondere einer Dosiereinheit des Futtersilos 1001, verbunden ist.

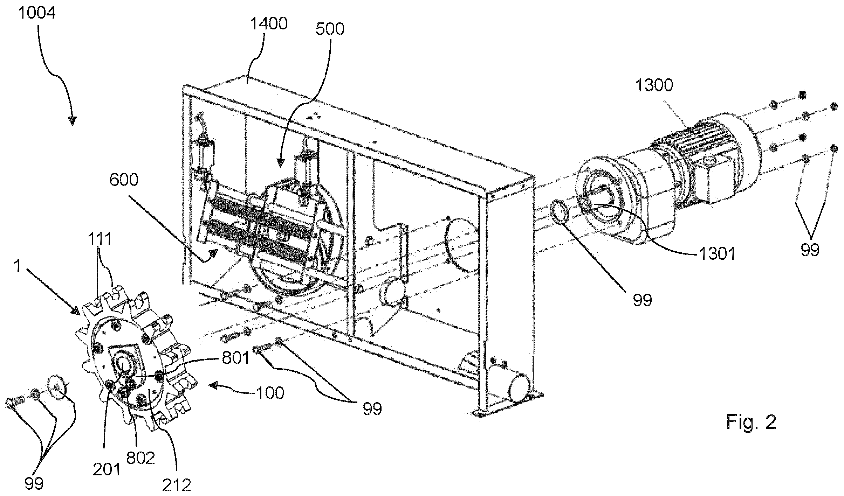

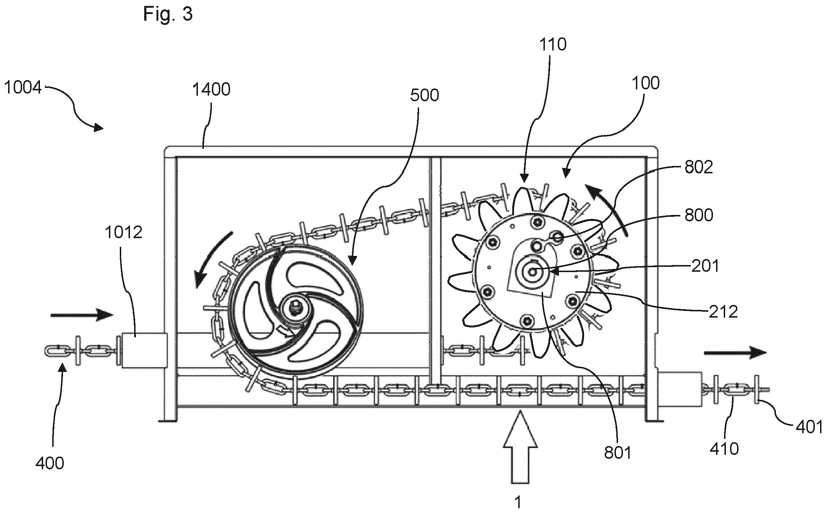

Wie insbesondere in den Figuren 2 und 3 zu erkennen ist, weist die Antriebseinheit 1004 innerhalb eines Rahmens 1400 ein Antriebsrads 1 und ein Umlaufrad 500 auf. Das Umlaufrad 500 wird über einen Spanneinheit 600 gespannt. Ein Antrieb 1300 treibt über eine Antriebswelle 1301, die in einem axialen Durchgang 201 des Antriebsrads 1 aufgenommen ist, das Antriebsrads 1 an. Das Antriebsrad 1 ist über Befestigungselemente 99 mit dem Antrieb 1300 der Antriebswelle 1301 verbunden.

Wie insbesondere in Figur 3 und auch in den dort eingezeichneten Pfeilen zu erkennen ist, dient das Antriebsrad 1 dazu, eine Förderkette 400, die in einem Förderrohr 1012 in die Antriebseinheit 1004 einläuft, anzutreiben und ein vom Antrieb 1300 über die Antriebswelle 1301 auf das Antriebsrad 1 übertragene Drehmoment in eine Vorschubbewegung der Förderkette 400 umzusetzen. Damit die Förderkette 400 ihre grundsätzliche Bewegungsrichtung beibehält, ist in der Antriebseinheit 1004 das Umlaufrad 500 vorgesehen. Zum Antreiben der Förderkette 400 weist das Antriebsrad 1 mehrere Zahnelemente 110 auf, die mit Stauscheiben 401 der Futterkette 400 in Eingriff kommen.

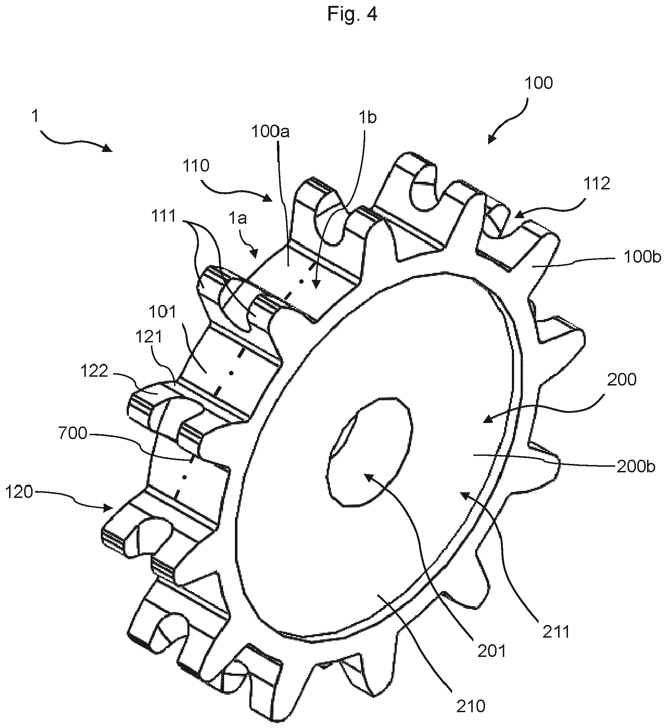

Wie insbesondere in Figur 4 zu erkennen ist, weist das Antriebsrad 1 ein Basisrad 200 mit einem axialen Durchgang 201 zur Aufnahme der Antriebswelle 1301 auf. Ferner weist das Antriebsrads 1 einen Zahnkranz 100 mit einer gezahnten Außenumfangsfläche auf. Die Außenumfangsfläche weist eine Vielzahl von Zahnelementen 110 auf, die in Umfangsrichtung äquidistant voneinander beabstandet sind. Zwischen den Zahnelementen 110 ist jeweils ein Zahngrund 101 ausgebildet. Jedes Zahnelement weist zwei in axialer Richtung beabstandete Zahnspitzen 111 auf, zwischen denen Kettenausnehmung 112 angeordnet ist. Wie insbesondere in den Figuren 3, 7 und 8 zu erkennen ist, verlaufen in den Kettenausnehmungen 112 der Zahnelemente 110 die Kettenglieder 410 bzw. die Seilabschnitte 420 der Futterkette 400 wenn die Stauscheiben 401 mit den entsprechenden Zahnelementen 110 in Eingriff sind.

Jedes der Zahnelemente 110 weist eine Stauscheibenanlagefläche 120 auf, die einen ersten Abschnitt 121 und einen zweiten Abschnitt 122 aufweist. Der erste Abschnitt 121 weist zum axialen Durchgang 201 in radialer Richtung einen kleineren Abstand auf als der zweite Abschnitt 122. Die Zahnspitzen 111 sind im zweiten Abschnitt 122 ausgebildet. Der erste Abschnitt 121 und der zweite Abschnitt 122 sind zueinander geneigt. Insbesondere können der erste und/oder der zweite Abschnitt 121, 122 gekrümmt sein, beispielsweise mit einem, vorzugsweise veränderlichen, Radius. Die Stauscheibenanlagefläche 120, insbesondere der erste und/oder der zweite Abschnitt 121, 122, können eine konturierte Oberfläche aufweisen.

Wie ferner insbesondere in Figur 4 zu erkennen ist, ist eine erste Seitenfläche 210 des Basisrads 200 gegenüber dem Zahnkranz 100 zurückversetzt und weist eine erste Aufnahme 211 für eine erste Stabilisierungsscheibe 212 auf. Vorzugsweise ist auf der in axialer Richtung gegenüberliegenden Seite des Basisrads 200 eine zweite Aufnahme für eine zweite Stabilisierungsscheibe ausgebildet, in der eine zweite Stabilisierungsscheibe angeordnet ist. Die Aufnahmen und Stabilisierungsscheibe sind vorzugsweise koaxial zum axialen Durchgang 201 angeordnet.

Das Antriebsrads 1 ist zweigeteilt ausgebildet mit einem ersten und zweiten Teil 1a, b. Ebenso ist der Zahnkranz 100 zweigeteilt ausgebildet mit einem ersten und zweiten Teil 100a, b und auch das Basisrad 200 ist zweigeteilt ausgebildet, wobei in Figur 4 nur der zweite Teil 200b des Basisrads 200 zu erkennen ist. Das Basisrad 100 ist entlang der Trennebene 700 in die zwei Teile 1a, b geteilt, wobei die Trennebene 700 orthogonal zum axialen Durchgang 201 angeordnet ist. Die Trennebene 700 bildet gleichzeitig die Trennebene zwischen dem ersten und dem zweiten Teil 100a, b des Zahnkranzes 100 und zwischen dem ersten und zweiten Teil des Basisrads 200. Diese zweigeteilte Ausgestaltung hat den Vorteil, dass beim Urformen, insbesondere Gießen in einer offenen Gussform, der jeweiligen Teile die Zahnspitzen 111 und Kettenausnehmung 112 leichter hergestellt werden können.

Der erste Teil 100a des Zahnkranzes 100 und der erste Teil des Basisrads 200 sind vorzugsweise einstückig ausgebildet und als Gussteil, insbesondere als Vakuum-Gussteil durch Gießen in einer offenen Gussform hergestellt. Der zweite Teil 100b des Zahnkranzes 100 und der zweite Teil 200b des Basisrads 200 sind vorzugsweise einstückig ausgebildet und als Gussteil, insbesondere als Vakuum-Gussteil durch Gießen in einer offenen Gussform hergestellt.

Der Zahnkranz 100, insbesondere seine beiden Teile 100a, b und vorzugsweise auch das Basisrad200, insbesondere seine beiden Teile, sind vorzugsweise aus dem gleichen Material ausgebildet, d.h. dass vorzugsweise das Zahnkranzmaterial und das Basismaterial identisch sind.

Das Zahnkranzmaterial ist ein elastisches Material, insbesondere mit einer SHORE-Härte A zwischen 90 und 120. Das elastische Zahnkranzmaterial ist vorzugsweise ein Kunststoff, insbesondere ein elastisches Polymer, wie vorzugsweise Polyurethan.

Durch die bevorzugte einstückige Ausgestaltung der jeweils ersten Teile des Zahnkranzes 100 und des Basisrads 200 und der jeweils zweiten Teile des Zahnkranzes 100 und des Basisrads 200 weist somit das in Figur 4 dargestellten Antriebsrad 1 insgesamt ein elastisches Material auf. Daher ist es bevorzugt, dass Stabilisierungsscheiben vorgesehen sind, die in den Aufnahmen des Basisrads 200 angeordnet sind, und vorzugsweise weniger elastisch ausgebildet sind und so für eine erhöhte Stabilität des Basisrads 200 sorgen. Das Stabilisierungsmaterial der Stabilisierungsscheiben ist vorzugsweise Stahl, insbesondere Stahlguss.

Die Stabilisierungsscheiben 212 dienen vorzugsweise auch zur Kraftübertragung von der Antriebswelle 1301 auf das Basisrad 200. Vorzugsweise erfolgt die Kraftübertragung von der Antriebswelle 1301 auf die Nabe 800 über eine Welle-Nabe Verbindung. Vorzugsweise ist ein Anschlussblech 801 mit der Nabe 800 kraft- und/oder form- und/oder stoffschlüssig verbunden. Die Kraftübertragung auf die Stabilisierungsscheibe 212 erfolgt vorzugsweise über eine Lastsicherung 802, die beispielsweise als eingeschnürtes Blechteil ausgebildet ist. Vorzugsweise ist vorgesehen, dass die Stabilisierungsscheibe 212 daraufhin die Kraft auf das Basisrad 200 überträgt.

Durch die Verwendung eines elastischen Zahnkranzmaterials und vorzugsweise auch durch die hier beschriebene Ausgestaltung der Zahnelemente 110, insbesondere der Stauscheibenanlagefläche 120, ergeben sich verschiedene Vorteile.

Zum einen kann hierdurch der Eingriff zwischen den Stauscheiben 401 und den Zahnelementen 110, insbesondere den Stauscheibenanlagefläche 120, verbessert werden.

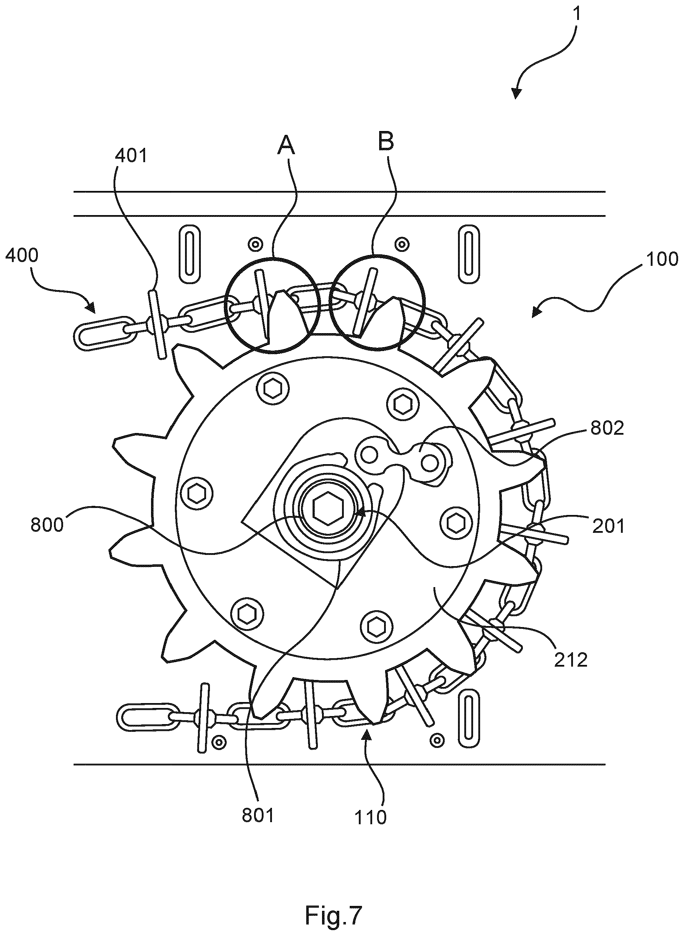

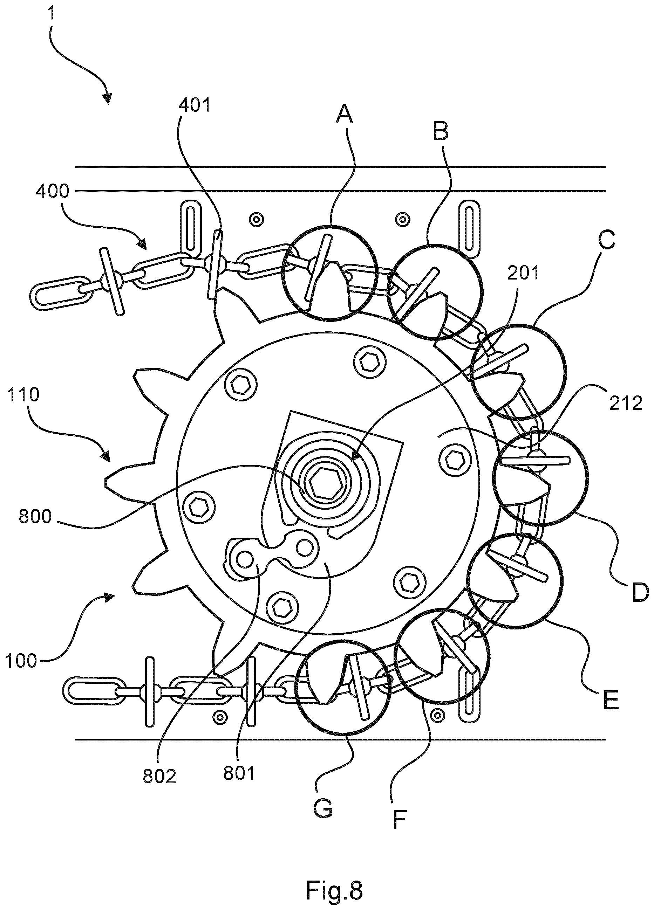

Ferner ermöglicht es die elastische Verformung der Zahnelemente 110, insbesondere unter einer hohen Belastung, und die Ausgestaltung der Stauscheibenanlageflächen 120, wie in den Figuren 7 und 8 dargestellt, dass eine größere Anzahl an Stauscheiben 401 mit einer entsprechend größeren Anzahl an Zahnelementen 110 in Eingriff kommt.

Figur 7 zeigt eine Situation mit nur geringer Belastung (also beispielsweise einer sehr kurzen Futterkette 400 und/oder einer nur sehr geringen zu fördernden Futtermenge), bei der nur zwei Stauscheiben 401 mit zwei Zahnelementen 110 in Eingriff sind, wie mit A und B hervorgehoben.

In Figur 8 hingegen ist eine Situation mit höherer Belastung gezeigt, bei der die Zahnelemente 110, die mit Stauscheiben 401 Eingriff stehen, elastisch verformt sind, sodass insgesamt eine Zahl von sieben Stauscheiben 401 mit den entsprechenden Zahnelementen 110 in Eingriff steht, wie in Figur 8 mit A bis G hervorgehoben.

Auf diese Weise kann eine deutlich längere Futterkette 400 bewegt werden bzw. kann eine größere Futtermenge gefördert werden. Gleichzeitig verringert die elastische Ausgestaltung des Zahnkranzes 100 den Verschleiß sowohl der Futterkette 400 als auch das Förderrohrs 1012, da ein Schlagen der Förderkette 400 verringert oder vermindert wird. Hierdurch verringert sich auch die Lärmbelastung, was wiederum dem Tierwohl zugutekommt.

Im Folgenden werden weitere bevorzugte Ausführungsbeispiele beschrieben.

Gemäß einem ersten Ausführungsbeispiel ist ein Antriebsrad zum Antreiben einer Futterkette für die Trockenfütterung von Nutztieren bevorzugt, umfassend
- ein Basisrad mit einem axialen Durchgang zur Aufnahme einer Antriebswelle,
- einen Zahnkranz mit einer gezahnten Außenumfangsfläche,
- wobei die Außenumfangsfläche eine Vielzahl von Zahnelementen aufweist,
- wobei jedes Zahnelement zwei Zahnspitzen und eine zwischen den zwei Zahnspitzen angeordnete Kettenausnehmung aufweist,
- wobei der Zahnkranz ein elastisches Zahnkranzmaterial aufweist oder daraus besteht.

Bevorzugt ist ferner ein Antriebsrad nach dem vorhergehenden Ausführungsbeispiel, dadurch gekennzeichnet, dass das Zahnkranzmaterial eine SHORE-Härte A von mindestens 90 und/oder maximal 120 aufweist.

Bevorzugt ist ferner ein Antriebsrad nach mindestens einem der vorhergehenden Ausführungsbeispiele, dadurch gekennzeichnet, dass jedes Zahnelement eine Stauscheibenanlagefläche aufweist, wobei vorzugsweise die Stauscheibenanlagefläche einen ersten Abschnitt und einen zweiten Abschnitt aufweist.

Bevorzugt ist ferner ein Antriebsrad nach mindestens einem der vorhergehenden Ausführungsbeispiele,
- dadurch gekennzeichnet, dass, der erste Abschnitt und der zweite Abschnitt der Stauscheibenanlagefläche zueinander geneigt sind, und/oder
- dadurch gekennzeichnet, dass die Stauscheibenanlagefläche, insbesondere der erste und/oder der zweite Abschnitt der Stauscheibenanlagefläche, gekrümmt ist, und/oder
- dadurch gekennzeichnet, dass die Stauscheibenanlagefläche, insbesondere der erste und/oder der zweite Abschnitt der Stauscheibenanlagefläche einen, vorzugsweise veränderlichen, Radius aufweist, und/oder
- dadurch gekennzeichnet, dass die Stauscheibenanlagefläche, insbesondere der erste und/oder der zweite Abschnitt der Stauscheibenaniagefläche, eine konturierte Oberfläche aufweist.

Bevorzugt ist ferner ein Antriebsrad nach mindestens einem der vorhergehenden Ausführungsbeispiele, dadurch gekennzeichnet, dass das Basisrad ein Basismaterial, vorzugsweise ein elastisches Basismaterial aufweist oder daraus besteht.

Bevorzugt ist ferner ein Antriebsrad nach mindestens einem der vorhergehenden Ausführungsbeispiele,
- dadurch gekennzeichnet, dass das Zahnkranzmaterial und das Basismaterial identisch sind, und/oder
- dadurch gekennzeichnet, dass das Zahnkranzmaterial und das Basismaterial ein Kunststoff ist oder Kunststoff umfasst, und/oder
- dadurch gekennzeichnet, dass das Zahnkranzmaterial Polyurethan ist oder Polyurethan umfasst.

Bevorzugt ist ferner ein Antriebsrad nach mindestens einem der vorhergehenden Ausführungsbeispiele,
- dadurch gekennzeichnet, dass der Zahnkranz und das Basisrad einstückig ausgebildet sind, und/oder
- dadurch gekennzeichnet, dass der Zahnkranz und/oder das Basisrad als Gussteil, insbesondere als Vakuum-Gussteil, ausgebildet ist bzw. sind.

Bevorzugt ist ferner ein Antriebsrad nach mindestens einem der vorhergehenden Ausführungsbeispiele,
- dadurch gekennzeichnet, dass der Zahnkranz zweigeteilt ausgebildet ist, wobei vorzugsweise eine Trennebene zwischen dem ersten und dem zweiten Teil des Zahnkranzes orthogonal zum axialen Durchgang angeordnet ist, und/oder
- dadurch gekennzeichnet, dass das Basisrad zweigeteilt ausgebildet ist, wobei vorzugsweise eine Trennebene zwischen dem ersten und dem zweiten Teil des Basisrads orthogonal zum axialen Durchgang angeordnet ist, und/oder
- dadurch gekennzeichnet, dass der erste Teil des Zahnkranzes und der erste Teil des Basisrads einstückig ausgebildet sind, und/oder dadurch gekennzeichnet, dass der zweite Teil des Zahnkranzes und der zweite Teil des Basisrads einstückig ausgebildet sind, und/oder
- dadurch gekennzeichnet, dass der erste Teil des Zahnkranzes und der erste Teil des Basisrads als Gussteil, insbesondere als Vakuum-Gussteil, ausgebildet sind, und/oder dadurch gekennzeichnet, dass der zweite Teil des Zahnkranzes und der zweite Teil des Basisrads als Gussteil, insbesondere als Vakuum-Gussteil, ausgebildet sind.

Bevorzugt ist ferner ein Antriebsrad nach mindestens einem der vorhergehenden Ausführungsbeispiele,
- dadurch gekennzeichnet, dass eine erste Seitenfläche des Basisrads gegenüber dem Zahnkranz zurückversetzt ist und vorzugsweise eine erste Aufnahme für eine erste Stabilisierungsscheibe bildet, und/oder
- dadurch gekennzeichnet, dass eine zweite Seitenfläche des Basisrads gegenüber dem Zahnkranz zurückversetzt ist und vorzugsweise eine zweite Aufnahme für eine zweite Stabilisierungsscheibe bildet, und/oder
- dadurch gekennzeichnet, dass in der ersten Aufnahme der ersten Seitenfläche des Basisrads eine erste Stabilisierungsscheibe angeordnet ist und/oder
- dadurch gekennzeichnet, dass in der zweiten Aufnahme der zweiten Seitenfläche des Basisrads eine zweite Stabilisierungsscheibe angeordnet ist.

Gemäß einem weiteren Ausführungsbeispiel ist eine Fütterungsanlage für die Trockenfütterung von Nutztieren bevorzugt, umfassend ein Antriebsrad nach mindestens einem der vorhergehenden Ausführungsbeispiele und eine Futterkette.

Gemäß einem weiteren Ausführungsbeispiel ist ein Zahnkranz für ein Antriebsrad nach mindestens einem der entsprechenden vorhergehenden Ausführungsbeispiele bevorzugt, wobei der Zahnkranz eine gezahnte Außenumfangsfläche umfasst, wobei die Außenumfangsfläche eine Vielzahl von Zahnelementen aufweist, wobei jedes Zahnelement zwei Zahnspitzen und eine zwischen den zwei Zahnspitzen angeordnete Kettenausnehmung aufweist, wobei der Zahnkranz ein elastisches Zahnkranzmaterial aufweist oder daraus besteht.

Gemäß einem weiteren Ausführungsbeispiel ist ein Verfahren zum Herstellen eines Antriebsrads nach mindestens einem der entsprechenden vorhergehenden Ausführungsbeispiele bevorzugt, das Verfahren umfassend:
- Formen eines Basisrads mit einem axialen Durchgang zur Aufnahme einer Antriebswelle,
- Formen eines Zahnkranzes mit einer gezahnten Außenumfangsfläche,
- wobei die Außenumfangsfläche eine Vielzahl von Zahnelementen aufweist,
- wobei jedes Zahnelement zwei Zahnspitzen und eine zwischen den zwei Zahnspitzen angeordnete Kettenausnehmung aufweist,
- wobei der Zahnkranz ein elastisches Zahnkranzmaterial aufweist oder daraus besteht.

Gemäß einem weiteren Ausführungsbeispiel ist ein Verfahren zum Antreiben einer Futterkette für die Trockenfütterung von Nutztieren bevorzugt, das Verfahren umfassend:
- Antreiben einer Futterkette mittels eines Antriebsrads nach mindestens einem der entsprechenden vorhergehenden Ausführungsbeispiele.

Gemäß einem weiteren Ausführungsbeispiel ist ein Verfahren zum Umrüsten eines Antriebsrads zum Antreiben einer Futterkette für die Trockenfütterung von Nutztieren bevorzugt, das Verfahren umfassend:
- Entfernen eines Zahnkranzes von einem Antriebsrad,
- Anordnen eines Zahnkranzes nach dem entsprechenden vorhergehenden Ausführungsbeispiel.

Gemäß einem weiteren Ausführungsbeispiel ist eine Verwendung eines Antriebsrads nach mindestens einem der entsprechenden vorhergehenden Ausführungsbeispiele in einer Fütterungsanlage für die Trockenfütterung von Nutztieren bevorzugt.

### Bezugszeichen

- 1: Antriebsrad
- 1a, b: erster und zweiter Teil des Antriebsrads
- 99: Befestigungselemente
- 100: Zahnkranz
- 100a, b: erster und zweiter Teil des Zahnkranzes
- 101: Zahngrund
- 110: Zahnelemente
- 111: Zahnspitzen
- 112: Kettenausnehmung
- 120: Stauscheibenanlagefläche
- 121: ersten Abschnitt der Stauscheibenanlagefläche
- 122: zweiter Abschnitt der Stauscheibenanlagefläche
- 200: Basisrad
- 200b: zweiter Teil des Basisrads
- 201: Durchgang
- 210: erste Seitenfläche des Basisrads
- 211: erste Aufnahme für eine erste Stabilisierungsscheibe
- 212: erste Stabilisierungsscheibe
- 400: Futterkette
- 401: Stauscheibe
- 410: Kettenglieder
- 420: Seilabschnitte
- 500: Umlaufrad
- 600: Spanneinheit
- 700: Trennebene
- 800: Nabe
- 801: Anschlussblech
- 802: Lastsicherung
- 1000: Fütterungsanlage
- 1001: Futtersilo
- 1002: Futterleitung
- 1003: Umlenkecke
- 1004: Antriebseinheit
- 1005: Steuerungseinheit
- 1006: Steuersignalleitungen
- 1010: Einzeltierfütterung
- 1012: Förderrohr
- 1020: Beschickung von Futterautomaten für Ferkelaufzucht
- 1030: Beschickung von Futterautomaten für Mast
- 1040: Beschickung von Abruffütterungsstationen für tragende Sauen in Gruppenhaltung
- 1300: Antrieb
- 1301: Antriebswelle
- 1400: Rahmen
- A-G: in Eingriff stehende Zahnelemente und Stauscheiben

## Patentansprüche

1. Antriebsrad (1) zum Antreiben einer Futterkette (400) für die Trockenfütterung von Nutztieren,
umfassend
- ein Basisrad (200) mit einem axialen Durchgang (201) zur Aufnahme einer Antriebswelle (1301),
- einen Zahnkranz (100) mit einer gezahnten Außenumfangsfläche,
- wobei die Außenumfangsfläche eine Vielzahl von Zahnelementen (110) aufweist,
- wobei jedes Zahnelement zwei Zahnspitzen (111) und eine zwischen den zwei Zahnspitzen angeordnete Kettenausnehmung (112) aufweist,
- wobei der Zahnkranz (100) ein elastisches Zahnkranzmaterial aufweist oder daraus besteht.

2. Antriebsrad (1) nach dem vorhergehenden Anspruch,
**dadurch gekennzeichnet, dass** das Zahnkranzmaterial eine SHORE-Härte A von mindestens 90 und/oder maximal 120 aufweist.

3. Antriebsrad (1) nach mindestens einem der vorhergehenden Ansprüche,
**dadurch gekennzeichnet, dass** jedes Zahnelement (110) eine Stauscheibenanlagefläche (120) aufweist, wobei vorzugsweise die Stauscheibenanlagefläche (120) einen ersten Abschnitt und einen zweiten Abschnitt (121, 122) aufweist.

4. Antriebsrad (1) nach mindestens einem der vorhergehenden Ansprüche,
- **dadurch gekennzeichnet, dass**, der erste Abschnitt (121) und der zweite Abschnitt der Stauscheibenanlagefläche (122) zueinander geneigt sind, und/oder
- **dadurch gekennzeichnet, dass** die Stauscheibenanlagefläche (120), insbesondere der erste und/oder der zweite Abschnitt der Stauscheibenanlagefläche (121, 122), gekrümmt ist, und/oder
- **dadurch gekennzeichnet, dass** die Stauscheibenanlagefläche (120), insbesondere der erste und/oder der zweite Abschnitt der Stauscheibenanlagefläche (121,122) einen, vorzugsweise veränderlichen, Radius aufweist, und/oder
- **dadurch gekennzeichnet, dass** die Stauscheibenanlagefläche (120), insbesondere der erste und/oder der zweite Abschnitt der Stauscheibenanlagefläche (121, 122), eine konturierte Oberfläche aufweist.

5. Antriebsrad (1) nach mindestens einem der vorhergehenden Ansprüche, **dadurch gekennzeichnet, dass** das Basisrad (200) ein Basismaterial, vorzugsweise ein elastisches Basismaterial aufweist oder daraus besteht.

6. Antriebsrad (1) nach mindestens einem der vorhergehenden Ansprüche,
- **dadurch gekennzeichnet, dass** das Zahnkranzmaterial und das Basismaterial identisch sind, und/oder
- **dadurch gekennzeichnet, dass** das Zahnkranzmaterial und das Basismaterial ein Kunststoff ist oder Kunststoff umfasst, und/oder
- **dadurch gekennzeichnet, dass** das Zahnkranzmaterial Polyurethan ist oder Polyurethan umfasst.

7. Antriebsrad (1) nach mindestens einem der vorhergehenden Ansprüche,
- **dadurch gekennzeichnet, dass** der Zahnkranz (100) und das Basisrad (200) einstückig ausgebildet sind, und/oder
- **dadurch gekennzeichnet, dass** der Zahnkranz (100) und/oder das Basisrad (200) als Gussteil, insbesondere als Vakuum-Gussteil, ausgebildet ist bzw. sind.

8. Antriebsrad (1) nach mindestens einem der vorhergehenden Ansprüche,
- **dadurch gekennzeichnet, dass** der Zahnkranz (100) zweigeteilt ausgebildet ist, wobei vorzugsweise eine Trennebene (700) zwischen dem ersten und dem zweiten Teil des Zahnkranzes (100a, b) orthogonal zum axialen Durchgang angeordnet ist, und/oder
- **dadurch gekennzeichnet, dass** das Basisrad (200) zweigeteilt ausgebildet ist, wobei vorzugsweise eine Trennebene (700) zwischen dem ersten und dem zweiten Teil des Basisrads (200b) orthogonal zum axialen Durchgang (201) angeordnet ist, und/oder
- **dadurch gekennzeichnet, dass** der erste Teil des Zahnkranzes (100) und der erste Teil des Basisrads (200) einstückig ausgebildet sind, und/oder **dadurch gekennzeichnet, dass** der zweite Teil des Zahnkranzes (100) und der zweite Teil des Basisrads (200b) einstückig ausgebildet sind, und/oder
- **dadurch gekennzeichnet, dass** der erste Teil des Zahnkranzes (100) und der erste Teil des Basisrads (200) als Gussteil, insbesondere als Vakuum-Gussteil, ausgebildet sind, und/oder **dadurch gekennzeichnet, dass** der zweite Teil des Zahnkranzes (100a, b) und der zweite Teil des Basisrads (200b) als Gussteil, insbesondere als Vakuum-Gussteil, ausgebildet sind.

9. Antriebsrad (1) nach mindestens einem der vorhergehenden Ansprüche,
- **dadurch gekennzeichnet, dass** eine erste Seitenfläche (210) des Basisrads (200) gegenüber dem Zahnkranz (100) zurückversetzt ist und vorzugsweise eine erste Aufnahme (211) für eine erste Stabilisierungsscheibe (212) bildet, und/oder
- **dadurch gekennzeichnet, dass** eine zweite Seitenfläche des Basisrads gegenüber dem Zahnkranz (100) zurückversetzt ist und vorzugsweise eine zweite Aufnahme für eine zweite Stabilisierungsscheibe bildet, und/oder
- **dadurch gekennzeichnet, dass** in der ersten Aufnahme der ersten Seitenfläche des Basisrads (210) eine erste Stabilisierungsscheibe (212) angeordnet ist und/oder
- **dadurch gekennzeichnet, dass** in der zweiten Aufnahme der zweiten Seitenfläche des Basisrads eine zweite Stabilisierungsscheibe angeordnet ist.

10. Fütterungsanlage (1000) für die Trockenfütterung von Nutztieren, umfassend ein Antriebsrad (1) nach mindestens einem der vorhergehenden Ansprüche und eine Futterkette (400).

11. Zahnkranz (100) für ein Antriebsrad (1) nach mindestens einem der vorhergehenden Ansprüche 1-9, wobei
der Zahnkranz (100) eine gezahnte Außenumfangsfläche umfasst, wobei die Außenumfangsfläche eine Vielzahl von Zahnelementen (110) aufweist, wobei jedes Zahnelement zwei Zahnspitzen (111) und eine zwischen den zwei Zahnspitzen (111) angeordnete Kettenausnehmung aufweist, wobei der Zahnkranz (100) ein elastisches Zahnkranzmaterial aufweist oder daraus besteht.

12. Verfahren zum Herstellen eines Antriebsrads (1) nach mindestens einem der vorhergehenden Ansprüche 1-9, das Verfahren umfassend:
- Formen eines Basisrads (200) mit einem axialen Durchgang (201) zur Aufnahme einer Antriebswelle (1301),
- Formen eines Zahnkranzes (100) mit einer gezahnten Außenumfangsfläche,
- wobei die Außenumfangsfläche eine Vielzahl von Zahnelementen (110) aufweist,
- wobei jedes Zahnelement zwei Zahnspitzen (111) und eine zwischen den zwei Zahnspitzen angeordnete Kettenausnehmung (112) aufweist,
- wobei der Zahnkranz (100) ein elastisches Zahnkranzmaterial aufweist oder daraus besteht.

13. Verfahren zum Antreiben einer Futterkette (400) für die Trockenfütterung von Nutztieren, das Verfahren umfassend:
- Antreiben einer Futterkette (400) mittels eines Antriebsrads (1) nach mindestens einem der vorhergehenden Ansprüche 1-9.

14. Verfahren zum Umrüsten eines Antriebsrads (1) zum Antreiben einer Futterkette (400) für die Trockenfütterung von Nutztieren, das Verfahren umfassend:
- Entfernen eines Zahnkranzes (200) von einem Antriebsrad (1),
- Anordnen eines Zahnkranzes (200) nach dem vorhergehenden Anspruch 11.

15. Verwendung eines Antriebsrads (1) nach mindestens einem der vorhergehenden Ansprüche 1-9 in einer Fütterungsanlage (1000) für die Trockenfütterung von Nutztieren.
